# EUROPÄISCHE PATENTANMELDUNG

(11) **EP 1 925 919 A1**
(43) Veröffentlichungstag der Anmeldung: **28.05.2008**
(21) Anmeldenummer: 06124719.3
(22) Anmeldetag: 24.11.2006
(51) Int. Cl.: G01G 7/02, G01G 21/24

(54) **Wägezelle**

(71) Anmelder: Mettler-Toledo AG, 8606 Greifensee (CH)
(72) Erfinder: Burkhard, Hans-Rudolf, 8492, Wila (CH)

(57) **Zusammenfassung**

Elektromagnetisches Kraftkompensations-Direktmesssystem mit einer mehrteiligen Parallelführung und mit einem Lastaufnehmer (8, 41), welcher über ein Kraftübertragungsgestänge (5, 44) mit einer Kraftkompensationsvorrichtung (12, 43) verbunden ist, wobei die Kraftkompensationsvorrichtung (12, 43) mindestens einen Permanentmagneten (9, 9') und eine elektrisch mit einem regelbaren Stromkreis verbundene Spule (11) aufweist, dadurch gekennzeichnet, dass mindestens ein Teil der Parallelführung in den regelbaren Stromkreis (15, 59) elektrisch eingebunden ist.

## Beschreibung

Die Erfindung bezieht sich auf ein elektromagnetisches Kraftkompensations-Direktmesssystem mit einem Lastaufnehmer und einer Kraftkompensationsvorrichtung, welche einer Spule und einen Permanentmagneten aufweist.

Ein elektromagnetisches Kraftkompensations-Direktmesssystem, im Folgenden als Direktmesssystem bezeichnet, zeichnet sich dadurch aus, dass der Lastaufnehmer über ein Kraftübertragungsgestänge direkt mit der Kraftkompensationsvorrichtung verbunden ist.

Bei der elektromagnetischen Kraftkompensation wird die Kraft, die durch eine Last auf der Waagschale bzw. dem Lastaufnehmer verursacht wird, durch eine Kraftkompensationsvorrichtung, die aus mindestens einem Permanentmagneten und einer Spule besteht, kompensiert, wobei der durch die Spule fliessende Strom zur Erzeugung der Kompensationskraft gemessen wird. Dieser Messwert ist proportional zur aufgelegten Last. Dieser Messwert ist aber auch abhängig von der Position der Spule im Magnetfeld des Permanentmagneten und deshalb muss die Spule beim Erfassen des Messwertes stets dieselbe Position gegenüber dem Magneten aufweisen. Die Position der Spule nach Aufbringen der Last wird über einen Lagegeber ermittelt und der Strom an der Spule solange erhöht, bis die von der Last verursachte Verschiebung der Spule gegenüber dem Permanentmagneten kompensiert ist. Dabei erfolgt die Messung des Spulenstroms, welcher ein Mass für das Gewicht der aufgelegten Last darstellt.

Ein Direktmesssystem wird in der CH 593 481 A5 offenbart. In dieser Patentschrift ist der Lastaufnehmer über ein Kraftübertragungsgestänge direkt mit der Kraftkompensationsvorrichtung gekoppelt. Am Kraftübertragungsgestänge ist die bewegliche Seite des Lagegebers angebracht, während die feststehende Seite des Lagegebers mit dem gehäusefesten Bereich der Wägezelle, beziehungsweise mit dem feststehenden Bereich der Kraftkompensationsvorrichtung, starr verbunden ist.

Dieses Direktmesssystem wird vorzugsweise im Niederlastbereich eingesetzt. Die Präzision der Messung hängt im wesentlich von der Auflösung und der Anordnung des Lagegebers im Direktmesssystem ab. Der Lastaufnehmer sowie die Spule der Kraftkompensationsvorrichtung müssen gegenüber dem feststehenden Bereich der Wägezelle präzise geführt werden. Dies geschieht über eine Parallelführung, deren beweglicher Parallelschenkel mit dem Kraftübertragungsgestänge verbunden ist und deren feststehender Parallelschenkel mit dem gehäusefesten Bereich der Wägezelle starr verbunden ist. Der bewegliche Parallelschenkel und der feststehende Parallelschenkel sind durch zwei biegesteife Parallellenker mittels Dünnstellenbiegelager miteinander verbunden. Es können jedoch auch federnde Parallellenker eingesetzt werden, dann entfallen die Dünnstellenbiegelager. Beim Auflegen einer Last auf den Lastaufnehmer verschiebt sich das Kraftübertragungsgestänge in Lastrichtung, was eine Auslenkung der Parallellenker zur Folge hat und die Dünstellenbiegelager oder elastischen Parallellenker biegt.

Die Parallelführung weist auf Grund ihrer Federkonstant in der Regel eine Rückstellkraft auf, welche ebenso wie eine auf den Lastaufnehmer aufgelegte Last eine Verschiebung der Spule bewirkt und ebenfalls kompensiert werden sollte.

In der Regel ist die Spule der Kraftkompensationsvorrichtung über dünne Drähte elektrisch mit einem regelbaren Stromkreis verbunden. Nachteilig an dieser Ausführung ist es, dass die Drähte neben der elektrischen Verbindung auch eine mechanische Verbindung vom feststehenden zum beweglichen Teil der Wägezelle herstellen. Dadurch wird eine zusätzliche Federkonstante in das Direktmesssystem eingebracht, welche auf die Parallelführung einwirkt und das Messergebnis verfälschen kann. Die Drähte werden in der Regel angelötet und sind besonders dünn und filigran ausgestaltet, um die zusätzlich auftretende Federkonstante möglichst klein zu halten. Die filigranen Drähte sind schwierig zu befestigen und es kann leicht passieren, dass sich einer der Drähte löst und so die Funktionsfähigkeit der Waage nicht mehr gegeben ist.

Die Federkonstante, welche durch die mechanische Verbindung des beweglichen und des feststehenden Bereichs der Wägezelle über den Spulenstromkreis entsteht, beeinflusst vor allem die Ergebnisse von Wägezellen für den Niederlastbereich und/oder bei einer hohen Auflösung des Wägeergebnisses, da dann selbst geringste Änderungen der Federkonstanten ausreichen, um eine Änderung des Messergebnisses zu verursachen.

Weiterhin hat sich vor allem bei kompakten Wägemodulen mit Direktmesssystemen für Mehrfachwägevorrichtungen, wie sie beispielsweise in der EP 05104522.7 offenbart werden, gezeigt, dass aufgrund einer unterschiedlichen thermische Ausdehnung der mit dem Lagegeber verbundenen Teile der Parallelführung und/oder des Kraftübertragungsgestänges die Nullpunktsdrift eines Direktmesssystems negativ beeinflusst wird.

Die Aufgabe der Erfindung liegt somit darin, die Stromversorgung der Spule eines Direktmesssystems ohne Aufbringung einer zusätzlichen Federkonstante zu gewährleisten. Weiterhin soll ein Direktmesssystem mit einer möglichst geringen Nullpunktsdrift geschaffen werden.

Ein elektromagnetisches Kraftkompensations-Direktmesssystem, im Folgenden als Direktmesssystem bezeichnet, weist eine mehrteilige Parallelführung, und einen Lastaufnehmer auf, welcher über ein Kraftübertragungsgestänge mit einer Kraftkompensationsvorrichtung verbunden ist. Die Kraftkompensationsvorrichtung weist mindestens einen Permanentmagneten und eine elektrisch mit einem regelbaren Stromkreis verbundene Spule auf. Mindestens ein Teil der Parallelführung ist elektrisch in den regelbaren Stromkreises eingebunden.

Die Begriffe mehrteilige Parallelführung und Teil der Parallelführung werden hier sowohl im Sinne von einer Parallelführung, welche aus mehreren Bauteilen besteht, als auch als Parallelführung mit mehreren funktionellen Bereichen bzw. Wirkteilen verwendet.

Durch die Einbindung mindestens eines Teils der Parallelführung in den regelbaren Stromkreis ist es möglich, die Stromversorgung der Spule zu gewährleisten ohne eine zusätzliche mechanische Verbindung zwischen dem feststehenden und dem beweglichen Bereich der Wägezelle herzustellen, wodurch beispielsweise die Messgenauigkeit, die Nulllast und auch die Reproduzierbarkeit der Wägezelle verbessert werden kann.

Das Teil kann beispielsweise teilweise und/oder vollständig aus einem elektrisch leidenden Material bestehen und durch geeignete Kontaktierung direkt elektrisch in den Spulenstromkreises eingebunden werden, wobei die Kontaktstelle selbst elektrisch isoliert sein sollte, um ungewünschte elektrische Effekte zu vermeiden.

Weiterhin kann mindestens eine Oberfläche des Teils teilweise und/oder vollständig mit einer elektrisch leitenden Schicht bedeckt sein. Bei einer teilweisen Bedeckung bietet es sich beispielsweise an, die elektrisch leitende Schicht in Form eines eine oder mehrere elektrische Leiterbahnen bildenden Musters aufzubringen.

Weist ein Teil mehrere elektrische Leiterbahnen auf, so sollten diese voneinander isoliert sein.

Das Teil kann auch mehrschichtig aufgebaut sein, beispielsweise in Form von einer oder mehrerer auf einem leitenden Kern aufgebrachten isolierenden Schichten oder in Form von einer oder mehrerer auf einem isolierenden Kern aufgebrachten leitenden Schichten.

In einem bevorzugten Ausführungsbeispiel weist ein Teil mindestens zwei voneinander isolierte Leiterbahnen auf, so dass nur ein Teil mit dem regelbaren Stromkreis verbunden werden kann, was insbesondere bei einer komplexen Parallelführung vorteilhaft ist.

Ein erfindungsgemässes Direktmesssystem kann unterschiedlich ausgebildete Parallelführungen aufweisen. Zum Beispiel kann die Parallelführung einen beweglichen Parallelschenkel und einen feststehende Parallelschenkel aufweisen, welche durch biegesteife Parallellenker mittels Dünnstellenbiegelager verbunden sind.

Das in den Stromkreis eingebundene Teil der Parallelführung kann ein Parallelschenkel und/oder ein Parallellenker sein.

In einem weiteren Ausführungsbeispiel weist die die Parallelführung mindestens zwei Parallelführungsglieder auf. Diese können beispielsweise federnde, membranartige Parallelführungsglieder sein, in denen durch geeignete Durchbrechungen sowohl ein feststehender Parallelschenkel als auch ein beweglicher Parallelschenkel ausgebildet sind, welche über mindestens einen Parallellenker verbunden sind. Derartige Parallelführungsglieder sind unter anderen in der EP 05104522.7 offenbart. Hier kann das Parallelführungsglied oder mindestens ein darin ausgebildeter Parallellenker und/oder mindestens ein darin ausgebildeter Parallelschenkel in den Stromkreis eingebunden werden.

Zur Bestimmung der Position der Spule nach Aufbringen der Last weist das Direktmesssystem einen Lagegeber auf. Die Position des Lagegebers kann mit einer geeigneten Abtastung ermittelt werden. Als Lagegeber kann beispielsweise ein Spalt verwendet werden, welcher am Kraftübertragungsgestänge angeordnet ist. Es sind verschiedenen Abtastungen zur Kontrolle der Position des Lagegebers bekannt, wobei eine optische Abtastung bevorzugt wird.

In einem weiteren Ausführungsbeispiel weist das Direktmesssystem eine Parallelführung auf, welche ein oberes und ein unteres Parallelführungsglied umfasst, und sich dadurch auszeichnet, dass der Lagegeber im Wesentlichen mittig zwischen dem oberen und dem unteren Parallelführungsglied angeordnet ist.

Diese Anordnung ist vorteilhaft, da hier die thermische Ausdehnung der mit dem Lagegeber verbundenen Teile des Kraftübertragungsgestänges sowie die des oberen und des unteren Parallelführungsglieds im Wesentlichen gleich ist und die Nullpunktsdrift des Direktmesssystems kaum beeinflusst.

Das untere und das obere Parallelführungsglied kann insbesondere zwischen Lastaufnehmer und der Kraftkompensationsvorrichtung angeordnet sein.

Die Position des Lagegebers kann mittels der Abtastung bestimmt werden, welche ebenfalls im Wesentlichen mittig zwischen dem oberen und dem unteren Parallelführungsglied angeordnet ist.

Die Figuren zeigen verschiedene Ausführungsformen eines erfindungsgemässen Direktmesssystems.
- Fig. 1: Direktmesssystem im Schnitt mit einem Lastaufnehmer, einem Kraftübertragungsgestänge, einer Parallelführung und einer Kraftkompensationsvorrichtung, welche eine Spule aufweist, die über mindestens ein Teil der Parallelführung an einen regelbaren Stromkreis angeschlossen ist;
- Fig. 2: Darstellung der Kraftkompensationsvorrichtung und der Parallelführung des Direktmesssystems aus Figur 1 im Schnitt;
- Fig. 3: Aufsicht auf ein Parallelführungsglied mit zwei elektrischen Leiterbahnen,
- Fig. 4: Darstellung eines Parallelführungsglieds mit zwei leitenden Schichten im Schnitt und in einer Aufsicht,
- Fig. 5: eine perspektivische Darstellung eines Direktmesssystems mit einer Parallelführung mit zwei oberen und zwei unteren Parallellenkern.

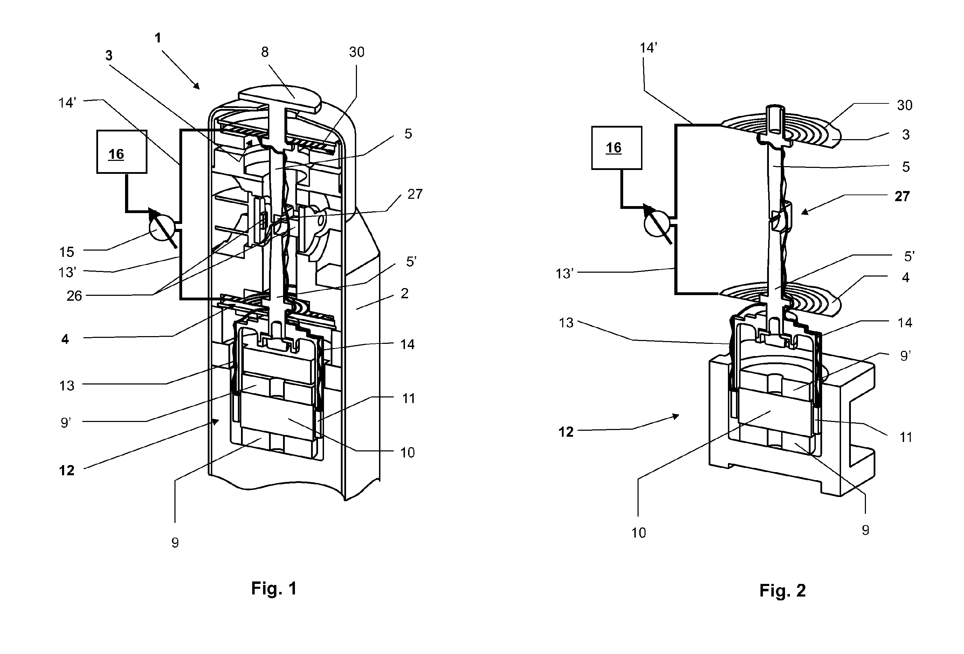

Figur 1 zeigt ein Direktmesssystem 1 im Schnitt mit einem Gehäuse 2. Figur 2 ist eine Teilansicht der Figur 1 ohne das Gehäuse. Die Figuren 1 und 2 werde im Folgenden im Wesentlichen gemeinsam beschrieben, wobei gleiche Merkmale mit denselben Bezugszeichen versehen sind.

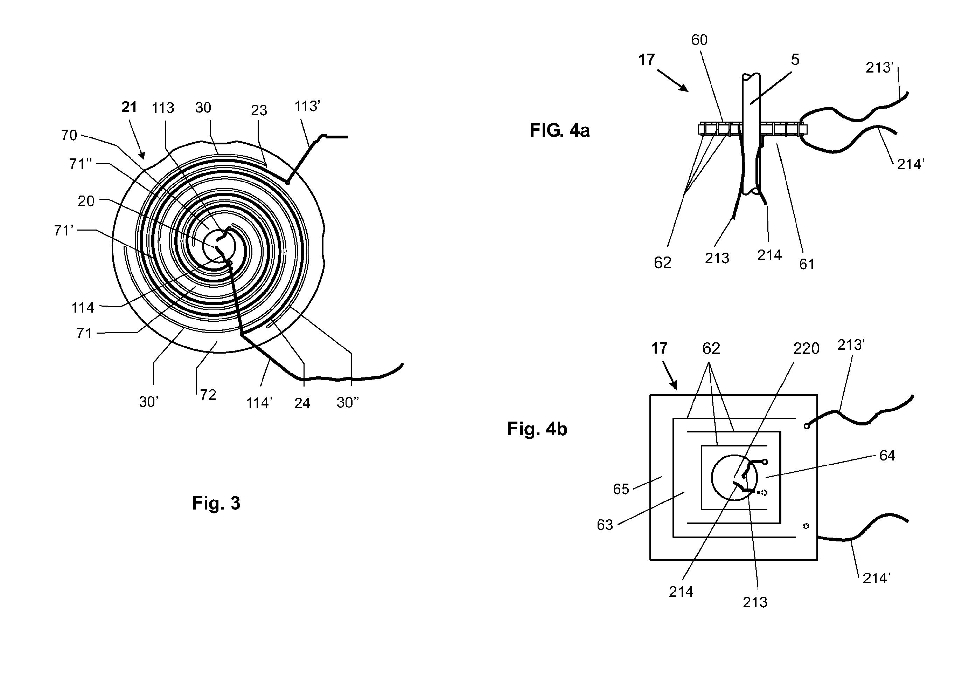

Das Direktmesssystem 1 weist einen Lastaufnehmer 8 auf, welcher über ein Kraftübertragungsgestänge 5, 5' und einen Lagegeber 27 mit einer Kraftkompensationsvorrichtung 12 verbunden ist. Der Lastaufnehmer 8 sowie eine Spule 11 der Kraftkompensationsvorrichtung 12 werden gegenüber einem gehäusefesten Bereich 2 des Direktmesssystems 1 präzise geführt. Dies geschieht über eine Parallelführung, welche zwei Parallelführungsglieder 3, 4 umfasst, deren Aufbau anhand der Figuren 3 und 4 näher erläutert wird. Am Kraftübertragungsgestänge 5, 5' sind die beweglichen Parallelschenkel der beiden Parallelführungsglieder 3, 4 angebracht, während die feststehenden Parallelschenkel mit dem feststehenden Bereich der Kraftkompensationsvorrichtung 12 starr verbunden sind.

Der Lagegeber 27 ist im Wesentlichen mittig zwischen den Parallelführungsgliedern 3, 4 im Kraftübertragungsgestänge 5, 5' angeordnet. Der Lagegeber 27 ist hier als einfacher Spalt zwischen dem mit einem Lastaufnehmer 8 verbundenen Teil des Kraftübertragsgestänges 5 und dem mit der Kraftkompensationsvorrichtung 12 verbundenen Teil des Kraftübertragsgestänges 5' ausgebildet.

Die Position des Lagegebers 27, genauer die des Spalts wird optisch mittels einer feststehenden Abtastung 26 ermittelt. Die Abtastung 26 ist ebenfalls im Wesentlichen mittig zwischen den Parallelführungsgliedern 3, 4 angeordnet. Wirkt beispielsweise eine Kraft auf den Lastaufnehmer 8 ein, so bewegt sich das Kraftübertragungsgestänge 5, 5' in Lastrichtung und die Position des Lagegebers 27 in Relation zur Abtastung 26 wird verändert. Durch eine Veränderung des durch die Kraftkompensationsvorrichtung 12 fliessenden Kompensationsstroms, wird die Krafteinwirkung der Last kompensiert und der Lagegeber 26 wieder in seine ursprüngliche Position gebracht. Der Kompensationsstrom ist ein Mass für das Gewicht der aufgebrachten Last.

Die Kraftkompensationsvorrichtung 12 besteht aus zwei Permanentmagneten 9, 9', zwischen denen ein Polschuh 10 angeordnet ist. Der Polschuh 10 wird von einer Spule 11 umgeben, die hier nur schematisch dargestellt ist. Die Spule 11 ist über zwei elektrische Leitungen an einen regelbaren Stromkreis angeschlossen, wie er durch die Stromquelle 15 angedeutet wird. Die erste Leitung weist eine direkt mit der Spule 11 verbundenen Leitungsteil 13, das untere Parallelführungsglied 4 sowie eine Leitungsteil 13' auf, welche das Parallelführungsglied 4 mit der Stromquelle 15 verbindet. Die zweite Leitung weist eine der Spule 11 verbundenen Leitungsteil 14, das obere Federelement 3 sowie den Leitungsteil 14' auf. Zumindest die Befestigungsbereiche der Leitungen bzw. der Leitungsteile an den Parallelführungsgliedern 3,4 sind elektrisch isoliert. Der über den Stromkreis 15 in die Spule 11 geleitete Kompensationsstrom wird durch eine geeignete Steuer- und/oder Regeleinheit 16 geregelt.

Die Parallelführungsglieder 3,4 bestehen in diesem Ausführungsbeispiel aus einem elektrisch leitenden Material, so dass sie direkt in den Stromkreis eingebunden werden können. Auf diese Weise wird der Spulenstrom über die beiden Parallelführungsglieder 3, 4 geführt, ohne eine zusätzliche mechanische Verbindung zwischen dem feststehenden und dem beweglichen Bereich der Wägezelle herzustellen.

Figur 3 zeigt eine Aufsicht auf ein Parallelführungsglied 21 mit zwei elektrischen Leiterbahnen 23, 24. Das Parallelführungsglied 21 weist hier drei mäanderförmige Durchbrechungen 30, 30', 30" auf, durch die ein mit dem Kraftübertragungsgestänge verbindbarer beweglicher Parallelschenkel 70, ein mit dem Gehäuse verbindbarer feststehender Parallelschenkel 72 sowie drei den feststehenden und den beweglichen Parallelschenkel verbindende Parallellenker 71, 71', 71" ausgebildet werden. Das Kraftübertragungsgestänge wird, wie in Figur 1 und 2 gezeigt, in der Durchführung 20 des Parallelführungsglieds 21 geführt.

Zwei Parallellenker 71', 71" sind mit elektrischen Leiterbahnen 23, 24 versehen, welche der Form der Parallellenker 71', 71" folgen. Die Leiterbahnen 23, 24 sind durch die Durchbrüche 30 elektrisch von einander isoliert. Verfahren zur Erzeugung derartiger Leiterbahnen 23, 24 auf einer Oberfläche des Parallelführungsglieds 21 sind bekannt und werden hier nicht näher ausgeführt. Beispielsweise besteht das Parallelführungsglied 21 aus einem elektrischen Isolator, auf den zur Ausbildung von Leiterbahnen ein elektrisch leitendes Material aufgebracht werden kann.

Jeweils eine der beiden Leiterbahnen 23, 24 ist elektrisch in die erste oder die zweite Leitung eingebunden. Die Kraftkompensationsvorrichtung mit der Spule ist beispielsweise wie in den Figuren 1 und 2 gezeigt unterhalb der Parallelführungsglieder angeordnet. Die Spule und die auf dem hier gezeigten Parallelführungsglied 21 ausgebildeten Leiterbahnen 23, 24 sind über die Leitungsteile 113, 114 verbunden. Auf der anderen Seite sind die Leiterbahnen 23, 24 über geeignete Leitungsteile 113', 114' mit einer hier nicht gezeigten Stromquelle sowie einer Steuer- und/oder Regeleinheit kontaktiert. Ein derartig ausgestaltetes Parallelführungsglied 21 kann als oberes und/oder unteres Parallelführungsglied in das in Figur 1 und 2 gezeigte Direktmesssystem eingesetzt werden.

Da sowohl die Stromzufuhr als auch die Stromableitung der Spule mittels des Parallelführungsglieds 21 möglich ist, wird in der Regel nur ein Parallelführungsglied 21 in den regelbaren Stromkreis der Spule integriert.

Ein alternatives Parallelführungsglied 17 mit zwei leitenden Schichten 60, 61 ist in Figur 4a im Schnitt und Figur 4b in einer Aufsicht gezeigt. Das Parallelführungsglied 17 weist U-förmige Durchbrechungen 62 auf sowie eine mittige Durchführung 220 für das Kraftübertragungsgestänge 5. Mittels der U-förmigen Unterbrechungen 62 sind mäanderförmig angeordnete, federnde Parallellenker 63 ausgebildet. Diese verbinden den in der Mitte des Parallelführungsglieds 17 angeordneten beweglichen Parallelschenkel 64 mit dem feststehenden Parallelschenkel 65, wobei der feststehende Parallelschenkel 65 in Form eines geschlossenen Rahmens die Parallellenker 63 und den beweglichen Parallelschenkel 64 umschliesst. Der Randbereich des feststehenden Parallelschenkels 65 kann mit geeigneten Befestigungsmitteln gehäusefest festgelegt werden.

Beide Oberflächen des Parallelführungsglieds 17 sind unter Auslassung eines Randbereichs mit einem elektrisch leitenden Material 60, 61 beschichtet. Eine Schicht 60 stellt über die Leitungsteile 213, 213' und die andere Schicht 61 über die Leitungsteile 214, 214' jeweils eine elektrische Verbindung zwischen der Spule und dem regelbaren Stromkreis her, welche hier beide nicht gezeigt sind. Die Stromzufuhr zur Spule erfolgt somit beispielsweise über die der Spule zugewandte Oberfläche des Parallelführungsgliedsl7 und die Stromableitung über die der Spule abgewandte Oberfläche, so dass es für eine Direktmesssystem mit mehreren Parallelführungsgliedern genügt es ein Parallelführungsglied elektrisch in den regelbaren Stromkreis einzubinden. Ebenso ist es möglich nur eine Oberfläche des Parallelführungsglieds zu beschichten und den Spulenstromkreis über beispielsweise zwei baugleiche Parallelführungsglieder anzuschliessen.

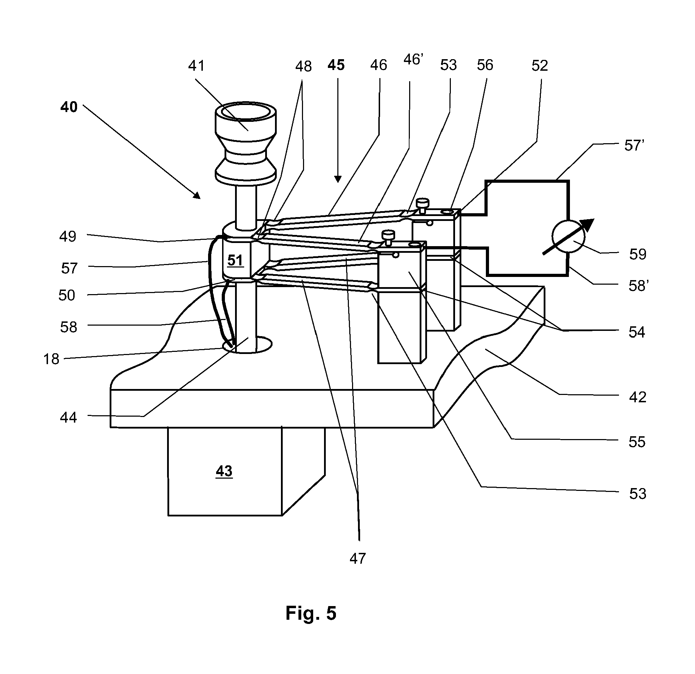

In Figur 5 ist als weiteres Ausführungsbeispiel ein Direktmesssystem 40 mit einem Lastaufnehmer 41 gezeigt. Ein solches Wägemodul 40 kann beispielsweise ein Bestandteil einer Mehrfachwägeanordung sein, in der mehrere Direktmesssysteme in einer vorgegeben räumlichen Anordnung zueinander angeordnet sind. Das Direktmesssystem 40 ist durch geeignete Befestigungsmittel mit einer Aufnahmestruktur 42 starr verbunden. Die Kraftkompensationsvorrichtung 43 des Wägemoduls 40 weist eine hier nicht dargestellte Spule auf, die mit einem Kraftübertragungsgestänge 44 verbunden ist. Am oberen Ende des Kraftübertragungsgestänges 44 ist der Lastaufnehmer 41 angebracht. Mit dem Kraftübertragungsgestänge 44 ist der bewegliche Parallelschenkel einer Parallelführung 45 verbunden. Diese Parallelführung weist zwei obere Parallellenker 46 und zwei untere Parallellenker 47 auf, die paarweise im Sinne einer V- Anordnung gegen den beweglichen Parallelschenkel der Parallelführung 45 hin zusammenlaufend angeordnet und mit diesem über Dünnstellenbiegelager 48 verbunden sind, wobei der bewegliche Parallelschenkel einen oberen beweglichen Parallelschenkel 49 und einen unteren beweglichen Parallelschenkel 50 beinhaltet, die durch das Distanzstück 51 voneinander getrennt sind.

Der feststehende Bereich der Parallelführung 45 beinhaltet die oberen Fixbereiche 52, die durch Dünnstellenbiegelager 53 mit den oberen Parallellenkern 46 verbunden sind, die unteren Fixbereiche 54, die ebenfalls durch Dünnstellenbiegelager 53 mit den unteren Parallellenkern 47 verbunden sind und den Zwischenstücken 55, die die oberen Fixbereiche 52 und die unteren Fixbereiche 54 im selben Masse voneinander trennen wie das Distanzstück 51. Der Fixbereich der Parallelführung 45 kann durch Schrauben 56 über die Abstandstücke 52 mit einer weiteren Wägezelle unter Bildung einer Mehrfachwägevorrichtung starr verbunden werden.

Die Stromversorgung der Spule, welche sich in der Wägezelle 43 befindet, erfolgt über zwei Leitungen, die mit einer regelbaren Stromquelle 59 sowie einer hier nicht gezeigten Steuer- und/oder Regeleinheit verbunden sind. Die erste Leitung umfasst hier ein mit der Spule verbundenen Leitungsteil 57 und einen oberen Parallellenker 46 sowie den Leitungsteil 57'. Die zweite Leitung weist eine mit der Spule verbundenen Leitungsteil 58, den zweiten oberen Parallellenker 46' einen weiteren Leitungsteil 58' auf. Die Leitungsteile 57, 58 können wie hier gezeigt durch eine Durchführung 18 in der Aufnahmestruktur 42 gelegt werden, wobei es auch möglich ist, die Leitungsteile 57, 58, welche die Spule mit einem der Parallelschenkel 49, 50 verbinden, im Inneren des Kraftübertragungsgestänges 44 anzuordnen. Die mit Strom beaufschlagten Parallellenker 46, 47 weisen wie bereits im Zusammenhang mit den Figuren 1 bis 4 beschrieben entweder eine elektrisch leitende Beschichtung, ein Muster aus einem elektrisch leitenden Material oder einen elektrisch leitenden Kern auf, welcher nach aussen elektrisch isoliert ist. Ebenso wäre es möglich, dass ein gegenüber der restlichen Parallelführung elektrisch isolierter Parallellenker in den Stromkreis eingebunden ist.

### Bezugszeichenliste

- 1: Direktmesssystem
- 2: Gehäuse
- 3: Parallelführungsglied
- 4: Parallelführungsglied
- 5: Kraftübertragungsgestänge
- 8: Lastaufnehmer
- 9, 9': Magnet
- 10: Polschuh
- 11: Spule
- 12: Kraftkompensationsvorrichtung
- 13, 13', 113: Leitungsteil
- 113', 213, 213': Leitungsteil
- 14, 14', 114: Leitungsteil
- 114', 214, 214': Leitungsteil
- 15: regelbare Stromquelle
- 16: Steuer- und/oder Regeleinheit
- 17: Parallelführungsglied
- 18: Durchführung
- 20, 220: Durchführung
- 21: Parallelführungsglied
- 23: elektrisch leitendes Muster / Leiterbahn
- 24: elektrisch leitendes Muster / Leiterbahn
- 26: Abtastung
- 27: Lagegeber
- 28: Dünnstellenbiegelager
- 30, 30', 30": Durchbruch
- 40: Direktmesssystem
- 41: Lastaufnehmer
- 42: Aufnahmestruktur
- 43: Kraftkompensationsvorrichtung
- 44: Kraftübertragungsgestänge
- 45: Parallelführung
- 46, 46': obere Parallellenker
- 47: untere Parallellenker
- 48: Dünnstellenbiegelager
- 49: oberen beweglichen Parallelschenkel
- 50: unteren beweglichen Parallelschenkel
- 51: Distanzstück
- 52: obere feststehender Bereich
- 53: Dünnstellenbiegelager
- 54: unteren feststehender Bereich
- 55: Zwischenstück
- 56: Schrauben
- 57, 57': Leitungsteil
- 59: regelbare Stromquelle
- 58, 58': Leitungsteil
- 60: elektrisch leitende Schicht
- 61: elektrisch leitende Schicht
- 62: Durchbrechungen
- 63: Parallellenker
- 64: beweglicher Parallelschenkel
- 65: feststehender Parallelschenkel
- 70: beweglicher Parallelschenkel
- 71, 71', 71": Parallellenker
- 72: feststehender Parallelschenkel

## Patentansprüche

1. Elektromagnetisches Kraftkompensations-Direktmesssystem mit einer mehrteiligen Parallelführung und mit einem Lastaufnehmer (8, 41), welcher über ein Kraftübertragungsgestänge (5, 44) mit einer Kraftkompensationsvorrichtung (12, 43) verbunden ist, wobei die Kraftkompensationsvorrichtung (12, 43) mindestens einen Permanentmagneten (9, 9') und eine elektrisch mit einem regelbaren Stromkreis verbundene Spule (11) aufweist, **dadurch gekennzeichnet, dass** mindestens ein Teil der Parallelführung in den regelbaren Stromkreis (15, 59) elektrisch eingebunden ist.

2. Direktmesssystem nach Anspruch 1, **dadurch gekennzeichnet, dass** das Teil (3, 4) vollständig aus einem elektrisch leitenden Material besteht.

3. Direktmesssystem nach Anspruch 1, **dadurch gekennzeichnet, dass** das mindestens eine Oberfläche des Teils (17, 21) zumindest teilweise eine elektrisch leitende Schicht aufweist.

4. Direktmesssystem nach einem der Ansprüche 1 bis 3, **dadurch gekennzeichnet, dass** das Teil (21) mindestens zwei von einander isolierte elektrische Leiterbahnen aufweist.

5. Direktmesssystem nach einem der Ansprüche 1 bis 4, **dadurch gekennzeichnet, dass** das in den Stromkreis eingebundene Teil der Parallelführung ein Parallelschenkel und/oder ein Parallellenker ist.

6. Direktmesssystem nach Anspruch 5, **dadurch gekennzeichnet, dass** mindestens ein feststehender Parallelschenkel (65, 72) und mindestens ein beweglicher Parallelschenkel (64, 70), welche durch mindestens einen Parallellenker (63, 71) miteinander verbunden sind, ein Parallelführungsglied ausbilden.

7. Direktmesssystem insbesondere nach einem der Ansprüche 1 bis 6, **dadurch gekennzeichnet, dass** das Direktmesssystem einen Lagegeber (27) aufweist, und dass die Parallelführung mindestens ein oberes Parallelführungsglied (3) und mindestens ein unteres Parallelführungsglied (4) aufweist, **dadurch gekennzeichnet, dass** der Lagegeber (27) im Wesentlichen mittig zwischen dem oberen Parallelführungsglied (3) und dem unteren Parallelführungsglied (4) angeordnet ist.

8. Direktmesssystem nach Anspruch 7, **dadurch gekennzeichnet, dass** das untere Parallelführungsglied (4) und das obere Parallelführungsglied (3) zwischen dem Lastaufnehmer (8) und der Kraftkompensationsvorrichtung (12) angeordnet sind.

9. Direktmesssystem nach einem der Ansprüche 7 oder 8, **dadurch gekennzeichnet, dass** das Direktmesssystem eine Abtastung (26) zur Kontrolle der Position des Lagegebers (27) aufweist.

10. Direktmesssystem insbesondere nach einem der Ansprüche 1 bis 9, **dadurch gekennzeichnet, dass** die Abtastung (26) im Wesentlichen mittig zwischen dem oberen Parallelführungsglied (3) und dem unteren Parallelführungsglied (4) angeordnet ist.
